# EUROPÄISCHE PATENTSCHRIFT

(11) **EP 2 511 059 B1**
(45) Veröffentlichungstag und Bekanntmachung des Hinweises auf die Patenterteilung: **24.07.2013**
(21) Anmeldenummer: 11003028.5
(22) Anmeldetag: 11.04.2011
(51) Int. Cl.: B27D 5/00, B29C 63/00

(54) **Vorrichtung und Verfahren zur Bekantung von Werkstücken**
Device and method for bevelling workpieces
Procédé et dispositif de bordage de pièces à usiner

(43) Veröffentlichungstag der Anmeldung: 17.10.2012
(73) Patentinhaber: IMA Klessmann GmbH Holzbearbeitungssysteme, 32312 Lübbecke (DE)
(72) Erfinder: Seifert, Uwe, 32361 Preussisch Oldendorf (DE)
(74) Vertreter: Schober, Mirko

(56) Entgegenhaltungen:
- EP-A2- 1 800 813
- DE-U1- 9 417 080
- FR-A- 1 592 355

## Beschreibung

Die Erfindung betrifft eine Vorrichtung zur Bekantung von Werkstücken nach Anspruch 1 und ein Verfahren zur Bekantung von Werkstücken nach Anspruch 10.

Ein gattungsgemäßes Verfahren und eine Vorrichtung nach dem Oberbegriff des Anspruchs 1 sind z.B. aus EP 1 800 813 A2, EP 1 163 864 A1 oder EP 1 233 853 B1 bekannt. Bei den bekannten Vorrichtungen wird ein Kantenband an das Werkstück zunächst herangeführt und dann mit diesem verbunden wird. Dabei bildet sich durch die Heranführung des Kantenbandes an das Werkstück ein Fügespalt aus. Im Bereich dieses Fügespalts wird eine Haftschicht oder haftvermittelnde Schicht auf dem Kantenband durch Strahlung aktiviert, so dass sie ihre Haftwirkung entfalten kann. Als Strahlungsquelle kann beispielsweise ein Laser verwendet werden. Die Haftschicht absorbiert dabei einen Teil der Strahlung, der Rest der Strahlung wird von der Schicht wieder in die Umgebung reflektiert.

Nach Aktivierung der Haftschicht wird das Kantenband durch eine geeignete Andruckvorrichtung an das Werkstück gedrückt, wobei durch die aktivierte Haftschicht oder haftvermittelnde Schicht eine dauerhafte Verbindung zwischen Kantenband und Werkstück entsteht.

Nachteilig an dieser Vorgehensweise ist insbesondere, dass nur der absorbierte Teil der Strahlung zur Aktivierung der Haftschicht oder der haftvermittelnden Schicht genutzt werden kann. Des Weiteren kann sich die unkontrolliert an die Umgebung abgegebene Strahlung je nach verwendeter Strahlungsquelle unter Umständen schädlich auf Mensch oder Material auswirken.

Daher liegt der Erfindung die Aufgabe zugrunde, eine Vorrichtung und ein Verfahren der eingangs genannten Art anzugeben, durch die die erwähnten Nachteile nicht auftreten.

Gelöst wird diese Aufgabe mit den Merkmalen der Ansprüche 1 und 10, vorteilhafte Ausführungsformen finden sich in den jeweiligen abhängigen Ansprüchen.

Erfindungsgemäß ist eine Reflexionseinrichtung vorgesehen, auf welche die von der Haftschicht oder haftvermittelnden Schicht reflektierte Strahlung reflektiert wird und welches die auf die Reflexionseinrichtung auftreffende Strahlung wieder auf die Haftschicht oder haftvermittelnde Schicht zurück reflektiert. Hierdurch wird zum Einen der zur Aktivierung der Haftschicht oder haftvermittelnden Schicht nutzbare Anteil der Strahlung erhöht, so dass sich weniger Srahlungsverluste ergeben, zum Anderen wird auch die Sicherheit der Einrichtung verbessert, weil durch die erfindungsgemäße Maßnahme die Strahlung im Wesentlichen zwischen Werkstück und Kantenband verbleibt und nicht unkontrolliert in den Arbeitsraum oder in andere Richtungen abgestrahlt werden kann. Die Reflexionseinrichtung ist dabei so angeordnet, dass das von einer Zuführeinrichtung an das Werkstück herangeführte Kantenband durch die Reflexionseinrichtung hindurchgeführt werden kann. Bevorzugt ist die Reflexionseinrichtung so angeordnet, dass sie in den Fügespalt zwischen Kantenband und Werkstück hineinreicht. Dazu weist die Reflexionseinrichtung zwei Reflexionsflächen auf, welche zur Andruckrolle hin konvergieren. Dabei kann die Einrichtung zur Heranführung des Kantenbandes an das Werkstück so ausgelegt sein, dass das Kantenband vor dem Kontakt mit der Andruckrolle den Bereich zwischen den Reflexionsflächen passiert.

Als Strahlung wird bevorzugt eine Laserstrahlung eingesetzt, jedoch können auch andere Strahlungsarten eingesetzt werden.

Bevorzugt ist die Reflexionseinrichtung als Reflexionstunnel ausgebildet, durch welchen das Kantenband hindurchgeführt wird.

Durch die erfindungsgemäße Reflexionseinrichtung wird die Strahlung, die vom Kantenband reflektiert wird, immer im Bereich des Kantenbandes gehalten und darauf zurückreflektiert. Insbesondere der Reflexionstunnel schafft eine allseitige Abschirmung der Strahlung, so dass unerwünschte Reflexionen in Bereiche außerhalb der Fügezone vermieden werden können.

Die Erfindung wird nachfolgend anhand der Figuren 1 bis 4 schematisch näher erläutert.
Figur 1 zeigt eine schematische Draufsicht zur Verdeutlichung des erfindungsgemäßen Prinzips der erfindungsgemäßen Vorrichtung.
Figur 2 zeigt einen vergrößerten Ausschnitt der in Figur 1 gezeigten Vorrichtung.
Figur 3 zeigt eine Draufsicht auf eine erfindungsgemäße Vorrichtung mit einer erfindungsgemäßen Reflexionseinrichtung.
Figur 4 zeigt einen Schnitt entlang der Linie A-A der Figur 3.

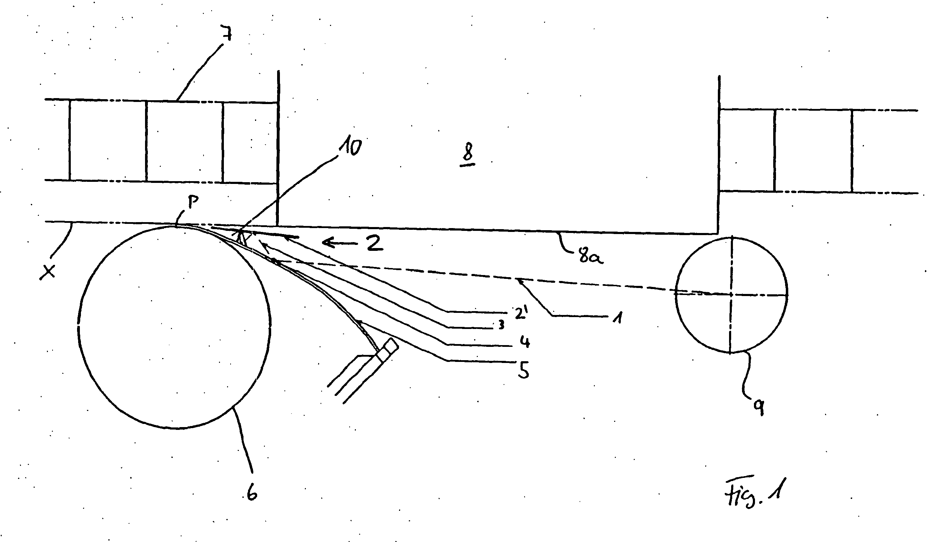

Das Prinzip der Reflexionseinrichtung wird mit Bezug auf die Figuren 1 und zwei näher erläutert. Das mit dem Werkstück 8 zu verbindende Kantenband 5 wird der Andruckzone zugeführt, in der es durch eine Andruckrolle, an das Werkstück 8 gedrückt wird. Beim Zusammenführen von Werkstück 8 und Kantenband 5 entsteht ein Fügespalt 10. Es ist eine Reflexionseinrichtung 2 vorgesehen, die in der dargestellten beispielhaften Ausführungsform in den Fügespalt 10 hineinreicht und sich in der beispielhaften Ausführungsform in einem spitzen Winkel zur Verarbeitungsrichtung X erstreckt.

Die Aktivierung der Haftschicht oder haftvermittelnden Schicht erfolgt durch die Strahlung 1, die von der beispielsweise als Laser ausgebildeten Strahlungsquelle 9 abgegeben wird. Diese Strahlung 1, die eine Laserstrahlung oder irgendeine andere geeignete Strahlung sein kann, trifft in einer Auftreffzone 4 auf das Kantenband 5. Ein Teil der Strahlung 1 wird von der Haftschicht oder haftvermittelnden Schicht des Kantenbandes 5 absorbiert und aktiviert diese. Der andere Teil der Strahlung 3 wird wieder ausgestrahlt bzw. vom Kantenband 5 in die Umgebung reflektiert. Idealerweise wird diese wieder ausgestrahlte Strahlung 3 nach dem Reflexionsgesetz reflektiert. Je nach der Oberflächenbeschaffenheit der Haftschicht oder der haftvermittelnden Schicht kann es auch zu Abweichungen von der regelmäßigen Reflexion kommen, beispielsweise einer Winkelverzerrung oder der diffusen Ausstrahlung (Streuung) zumindest eines Teils der reflektierten Strahlung 3.

Die reflektierte Strahlung 3 wird nun von der Reflexionseinrichtung 2 vollständig oder zumindest zum großen Teil reflektiert. Idealerweise ist die Reflexionseinrichtung 2 wenigstens zwischen Werkstück 8 und Kantenband 5 in den Fügespalt 10 hineinreichend angeordnet, so dass die von der Reflexionseinrichtung 2 reflektierte Strahlung zu einem möglichst großen Teil wieder auf das Kantenband 5 zurück reflektiert wird.

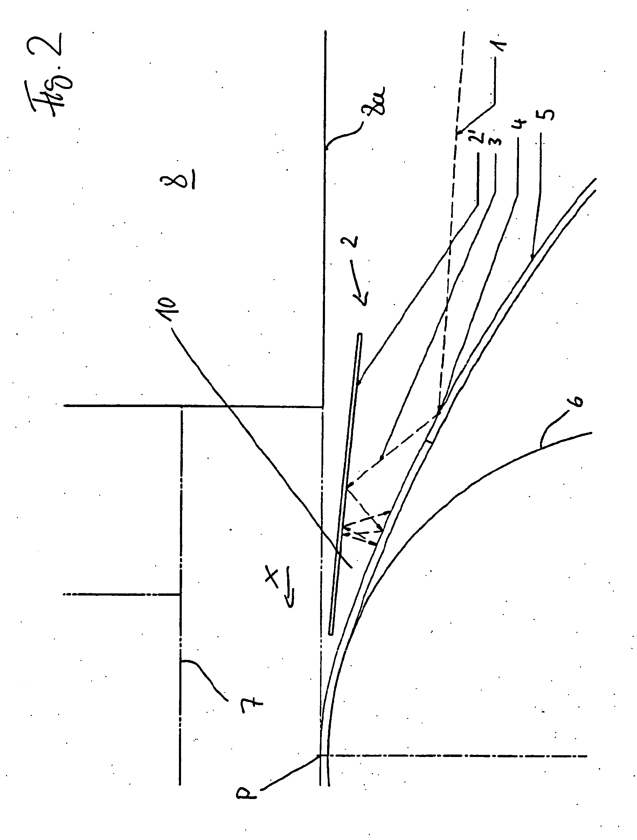

Von der Haftschicht oder der haftvermittelnden Schicht wird von dieser, nun zum zweiten Mal auf das Kantenband 5 treffenden Strahlung ebenfalls wieder nur ein Teil absorbiert, so dass die zurück reflektierte Strahlung nicht unwiederbringlich verloren geht, sondern ebenfalls zur Aktivierung der Haftschicht oder haftvermittelnden Schicht beitragen kann. Es ist insbesondere möglich, dass es zu einer Wiederholung oder einer Mehrzahl an Wiederholungen des oben beschriebenen Vorgangs der Strahlungsreflexion zwischen Reflexionseinrichtung 2 und Kantenband 5 kommt, wie dies insbesondere in Figur 2 durch den gestrichelt gezeichneten Strahlengang angedeutet ist.

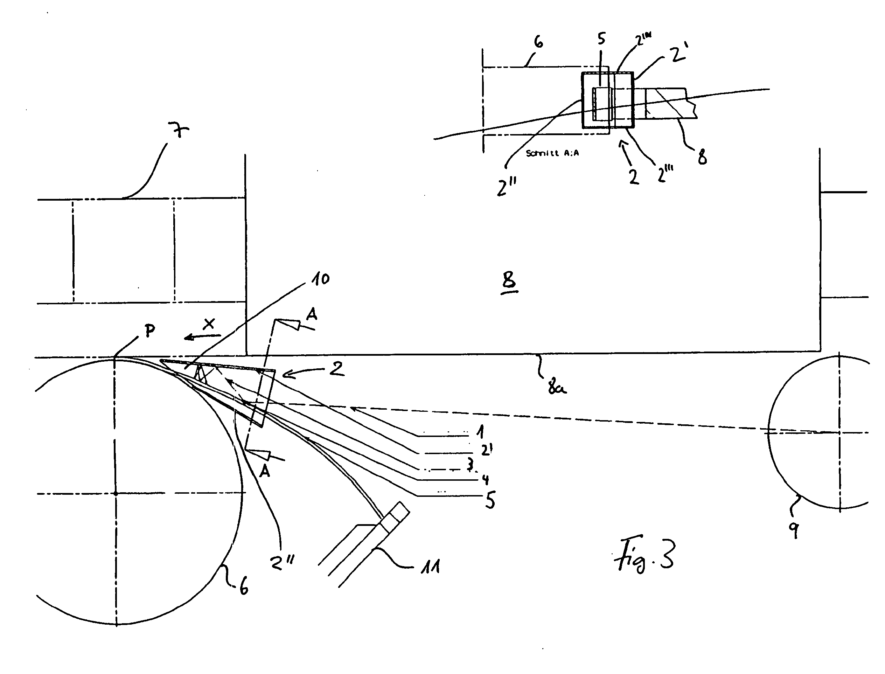

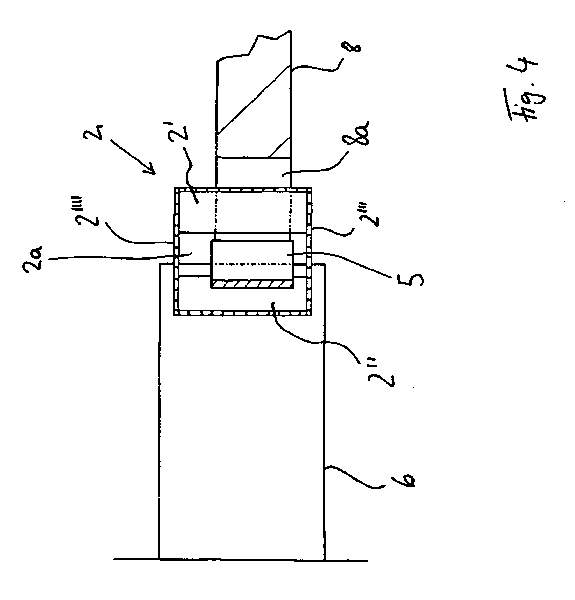

Die Reflexionseinrichtung 2 ist, wie in der Figur 3 gezeigt ist, so angeordnet, dass das Kantenband 5, das durch die Einrichtung 11 an das Werkstück 8 bzw. dessen Schmalseite 8a herangeführt wird, die Reflexionseinrichtung 2, bevorzugt im Bereich des Fügespaltes bzw. der Fügezone 10, durchläuft, bevor das Kantenband 5 im Punkt P durch die Andruckrolle 6 gegen das Werkstück 8 gedrückt wird. Die Reflexionseinrichtung 2 weist wenigstens die in Figur 1 gezeigten zwei Reflexionsflächen 2' und 2" auf, zwischen denen das Kantenband 5 geführt wird. Bevorzugt ist vorgesehen, dass das Kantenband 5 beim Durchlaufen der Reflexionseinrichtung 2 von dieser umschlossen wird. Dies kann, wie in der Schnittdarstellung der Figur 4 gezeigt, durch weitere Reflexionsflächen 2''', 2'''' erreicht werden, welche zusammen mit den Reflexionsflächen 2', 2'' einen geschlossenen Tunnel bilden. Es ist aber auch möglich, ein Rechteckrohr, Rundrohr oder dergleichen mit über die Länger konstantem oder sich veränderndem (bevorzugt in Richtung der Andruckzone P verjüngendem) Querschnitt einzusetzen. Bei einem sich verjüngenden Querschnitt kann der Reflexionstunnel 2 besonders gut in der sich ebenfalls zum Andruckbereich P hin verjüngenden Fügezone 10 platziert werden.

## Patentansprüche

1. Vorrichtung zur Bekantung von Werkstücken (8) mit einem Kantenband (5), mit einer Strahlenquelle (9), einer Einrichtung (11) zur Heranführung eines Kantenbandes (5) an ein Werkstück (8) und einer Andruckzone, in der eine Andruckrolle (6) vorgesehen ist, wobei die Vorrichtung so ausgebildet ist, dass Kantenband (5) und Werkstück (8) relativ zueinander bewegbar sind und das Kantenband (5) im Bereich der Andruckzone durch relative Bewegung von Werkstück (8) und Kantenband (5) an die Kante (8a) des Werkstücks (8) unter Bildung eines Fügespaltes (10) herangeführt und dann mittels der Andruckrolle (6) angedrückt wird, wobei die aus der Strahlungsquelle (9) in den Bereich des Fügespaltes (10) ausgestrahlte Strahlung (1) die Aktivierung einer Haftschicht oder haftvermittelnden Schicht bewirkt, mittels derer Kantenband (5) und Werkstück (8) verbunden werden,
**dadurch gekennzeichnet,**
**dass** wenigstens eine Reflexionseinrichtung (2) zur Reflexion von vom Kantenband (5) reflektierter Strahlung (1) vorgesehen und so ausgelegt ist, dass das Kantenband (5) durch die Reflexionseinrichtung (2) hindurchführbar ist, wobei die Reflexionseinrichtung (2) wenigstens zwei Reflexionsflächen (2', 2") aufweist, und die Einrichtung (11) zur Heranführung des Kantenbandes (5) an das Werkstück (8) so ausgelegt ist, dass das Kantenband (5) vor dem Kontakt mit der Andruckrolle (6) den Bereich zwischen den Reflexionsflächen passiert.

2. Vorrichtung nach Anspruch 1,
**dadurch gekennzeichnet,**
**dass** die Reflexionseinrichtung (2) in den Bereich des Fügespaltes (10) hineinreicht.

3. Vorrichtung nach Anspruch 1 oder 2,
**dadurch gekennzeichnet,**
**dass** die Reflexionseinrichtung (2) so angeordnet ist, dass die darauf reflektierte Strahlung (1) auf das Kantenband (5) zurück reflektiert wird.

4. Vorrichtung nach einem der vorherigen Ansprüche,
**dadurch gekennzeichnet,**
**dass** die Strahlung (1) eine Laserstrahlung ist.

5. Vorrichtung nach einem der vorherigen Ansprüche,
**dadurch gekennzeichnet,**
**dass** die Strahlung (1) vor Auftreffen auf der Reflexionseinrichtung (2) auf das Kantenband (5) geführt ist.

6. Vorrichtung nach einem der vorherigen Ansprüche,
**dadurch gekennzeichnet,**
**dass** die Reflexionseinrichtung (2) sich im Wesentlichen in einer Verarbeitungsrichtung (X) oder in einem spitzen Winkel zur Verarbeitungsrichtung (X) erstreckt, in die das Werkstück (8) oder das Kantenband (5) geführt sind.

7. Vorrichtung nach einem der Ansprüche 1 bis 6,
**dadurch gekennzeichnet,**
**dass** die Reflexionseinrichtung (2) sich zur Andruckzone (P) hin verjüngend ausgebildet ist, indem die beiden Reflexionsflächen (2', 2") relativ zueinander so angeordnet sind, dass sie zur Andruckzone (P) hin konvergieren.

8. Vorrichtung nach einem der vorherigen Ansprüche,
**dadurch gekennzeichnet,**
**dass** die Reflexionseinrichtung (2) als sich in Richtung der Andruckzone (P) hin verjüngender Tunnel ausgebildet ist.

9. Vorrichtung nach einem der Ansprüche 1 bis 8,
**dadurch gekennzeichnet,**
**dass** die Reflexionseinrichtung (2) wenigstens eine weitere Reflexionsfläche (2"', 2"") aufweist, welche etwa senkrecht zu den wenigstens zwei Reflexionsflächen (2', 2") angeordnet ist.

10. Verfahren zur Bekantung von Werkstücken (8) mit einem Kantenband (5), bei dem im Bereich einer Andruckzone das Kantenband (5) durch relative Bewegung von Werkstück (8) und Kantenband (5) an die Kante (8a) des Werkstücks (8) unter Bildung eines Fügespaltes (10) herangeführt und dann mittels einer Andruckrolle (6) angedrückt wird, wobei eine aus einer Strahlungsquelle (9) ausgestrahlte Strahlung (1) in den Bereich des Fügespaltes (10) geführt wird und dort die Aktivierung einer Haftschicht oder haftvermittelnden Schicht bewirkt, mittels derer Kantenband (5) und Werkstück (8) verbunden werden,
**dadurch gekennzeichnet,**
**dass** das Kantenband (5) durch wenigstens eine Reflexionseinrichtung (2) zur Reflexion von vom Kantenband (5) reflektierter Strahlung (1) hindurchgeführt wird, die Reflexionseinrichtung (2) wenigstens zwei Reflexionsflächen (2', 2) aufweist, und die Einrichtung (11) zur Heranführung des Kantenbandes (5) an das Werkstück (8) so ausgelegt ist, dass das Kantenband (5) vor dem Kontakt mit der Andruckeinrichtung (6) den Bereich zwischen den Reflexionsflächen passiert.

11. Verfahren nach Anspruch 10,
**dadurch gekennzeichnet,**
**dass** die Reflexionseinrichtung (2) zur Reflexion von Strahlung (1) in Richtung auf das Kantenband (5) eingesetzt wird.

12. Verfahren nach Anspruch 10 oder 11,
**dadurch gekennzeichnet,**
**dass** wenigstens eine Reflexionsfläche (2') der Reflexionseinrichtung (2) so positioniert wird, dass die Reflexionsfläche (2') sich zwischen Kantenband (5) und zu bekantendem Werkstück (8) erstreckt.

13. Verfahren nach einem der Ansprüche 10 bis 12,
**dadurch gekennzeichnet,**
**dass** das Reflexionseinrichtung (2) so angeordnet wird, dass die darauf reflektierte Strahlung (1) auf das Kantenband (5) zurück reflektiert wird.

14. Verfahren nach einem der Ansprüche 10 bis 13,
**dadurch gekennzeichnet,**
**dass** als Strahlung (1) eine Laserstrahlung eingesetzt wird.

15. Verfahren nach einem der Ansprüche 10 bis 14,
**dadurch gekennzeichnet,**
**dass** die Strahlung (1) so geführt wird, dass sie vor Auftreffen auf eine Reflexionsfläche (2') der Reflexionseinrichtung (2) auf das Kantenband (5) trifft.

16. Verfahren nach einem der Ansprüche 10 bis 15,
**dadurch gekennzeichnet,**
**dass** wenigstens eine Reflexionsfläche (2') der Reflexionseinrichtung (2) im Wesentlichen in einer Verarbeitungsrichtung (X) oder in einem spitzen Winkel zur Verarbeitungsrichtung (X) sich erstreckend angeordnet wird, in die das Werkstück (8) oder das Kantenband (5) geführt werden.

## Claims

1. Device for edging workpieces (8) with an edging strip (5), with a radiation source (9), a device for bringing an edging strip (5) up against a workpiece (8) and a contact pressure zone in which a contact pressure roller (6) is provided wherein the device is designed so that the edging strip (5) and the workpiece (8) are movable relative to one another and the edging strip (5) in the area of the contact pressure zone is brought by relative movement of the workpiece (8) and edging strip (5) up against the edge (8a) of the workpiece (8) whilst forming a joining gap (10) and is then pressed on by means of the contact pressure roller (6) wherein the radiation (1) emerging from the radiation source (9) into the area of the joining gap (10) triggers the activation of an adhesive layer or adhesion-enhancing layer, by means of which the edging strip (5) and workpiece (8) are connected, **characterised in that** at least one reflection device (2) is provided for reflecting the radiation (1) reflected by the edging strip (5), and is designed so that the edging strip (5) can be passed through the reflection device (2) wherein the reflection device (2) has at least two reflection surfaces (2', 2"), and the device (11) for bringing the edging strip (5) up against the workpiece (8) is designed so that the edging strip (5) passes the area between the reflection surfaces before contact with the contact pressure roller (6).

2. Device according to claim 1 **characterised in that** the reflection device (2) extends into the area of the joining gap (10).

3. Device according to claim 1 or 2 **characterised in that** the reflection device (2) is arranged so that the radiation (1) reflected thereat is reflected back to the edging strip (5).

4. Device according to one of the preceding claims **characterised in that** the radiation (1) is a laser beam.

5. Device according to one of the preceding claims **characterised in that** the radiation (1) is guided onto the edging strip (5) before striking the reflection device (2).

6. Device according to one of the preceding claims **characterised in that** the reflection device (2) extends substantially in a processing direction (x) or at an acute angle to the processing direction (x) in which the workpiece (8) or the edging strip (5) are guided.

7. Device according to one of claims 1 to 6 **characterised in that** the reflection device (2) is designed tapering towards the contact pressure zone (P), with the two reflection surfaces (2', 2") being arranged relative to one another so that they converge towards the contact pressure zone (P).

8. Device according to one of the preceding claims **characterised in that** the reflection device (2) is formed as a tunnel tapering towards the contact pressure zone (P).

9. Device according to one of claims 1 to 8 **characterised in that** the reflection device (2) has at least one further reflection surface (2"', 2"") which is arranged roughly perpendicular to the at least two reflection surfaces (2', 2").

10. Method for edging workpieces (8) with an edging strip (5), wherein in the area of a contact pressure zone the edging strip (5) is brought up against the edge (8a) of the workpiece (8) through relative movement of the workpiece (8) and edging strip (5) whilst forming a joining gap (10) and is then pressed on by means of a contact pressure roller (6), wherein the radiation (1) emerging from the radiation source (9) is guided into the area of the joining gap (10) and there triggers the activation of an adhesive layer or adhesion-enhancing layer, by means of which the edging strip (5) and workpiece (8) are connected, **characterised in that** the edging strip (5) is guided through at least one reflection device (2) for the reflection of radiation (1) reflected by the edging strip (5), the reflection device (2) has at least two reflection surfaces (2', 2) and the device (11) for bringing the edging strip (5) up against the workpiece (8) is designed so that the edging strip (5) passes the area between the reflection surfaces before contact with the contact pressure device (6).

11. Method according to claim 10 **characterised in that** the reflection device (2) is used for reflecting radiation (1) in the direction of the edging strip (5).

12. Method according to claim 10 or 11 **characterised in that** at least one reflection surface (2') of the reflection device (2) is positioned so that the reflection surface (2') extends between the edging strip (5) and the workpiece (8) which is to be edged.

13. Method according to one of claims 10 to 12 **characterised in that** the reflection device (2) is arranged so that the radiation (1) reflected thereat is reflected back to the edging strip (5).

14. Method according to one of claims 10 to 13 **characterised in that** a laser beam is used as radiation (1).

15. Method according to one of claims 10 to 14 **characterised in that** the radiation (1) is guided so that it strikes the edging strip (5) before striking a reflection surface (2') of the reflection device (2).

16. Method according to one of claims 10 to 15 **characterised in that** at least one reflection surface (2') of the reflection device (2) is arranged extending substantially in a processing direction (x) or at an acute angle to the processing direction (x) in which the workpiece (8) or the edging strip (5) are guided.

## Revendications

1. Dispositif pour border des pièces à traiter (8) avec une bande de chant (5), lequel comprend une source de rayonnement (9), une installation d'amenée (11) de la bande de chant (5) sur une pièce à traiter (8) et une zone de pression, dans laquelle est prévu un rouleau de pression (6), sachant que ledit dispositif est configuré de sorte que la bande de chant (5) et la pièce à traiter (8) peuvent être déplacées l'une par rapport à l'autre et que la bande de chant (5) est amenée, dans la zone de pression, sur le chant (8a) de la pièce à traiter (8), en formant une fente d'assemblage (10), et est alors pressée au moyen du rouleau de pression (6), sachant que le faisceau (1), en provenance de la source de rayonnement (9) et émis dans la région de la fente d'assemblage (10), provoque l'activation d'une couche adhésive ou d'une couche assurant l'adhésion, au moyen de laquelle la bande de chant (5) et la pièce à traiter (8) sont assemblées,
**caractérisé en ce que**
au moins une installation de réflexion (2) est prévue pour la réflexion du faisceau (1) réfléchi par la bande de chant (5) et est conçue de sorte que la bande de chant (5) peut être conduite à travers l'installation de réflexion (2), sachant que l'installation de réflexion (2) présente au moins deux surfaces de réflexion /2', 2") et que l'installation d'amenée (11) de la bande de chant (5) sur la pièce à traiter (8) est conçue de sorte que ladite bande de chant (5) passe par la zone entre les surfaces de réflexion avant d'entrer en contact avec le rouleau de pression (6).

2. Dispositif selon la revendication 1, **caractérisé en ce que** l'installation de réflexion (2) parvient jusque dans la zone de la fente d'assemblage (10).

3. Dispositif selon revendication 1 ou 2, **caractérisé en ce que** l'installation de réflexion (2) est disposée de sorte que le faisceau (1) y réfléchi est rétro réfléchi sur la bande de chant (5).

4. Dispositif selon l'une des revendications précédentes, **caractérisé en ce que** le faisceau (1) est un faisceau laser.

5. Dispositif selon l'une des revendications précédentes, **caractérisé en ce que** le faisceau (1) est guidé sur la bande de chant (5) avant de frapper sur l'installation de réflexion (2).

6. Dispositif selon l'une des revendications précédentes, **caractérisé en ce que** l'installation de réflexion (2) s'étend sensiblement dans une direction de traitement (X) ou en angle aigu par rapport à la direction de traitement (X) dans laquelle la pièce à traiter (8) ou la bande de chant (5) est conduite.

7. Dispositif selon l'une des revendications 1 à 6, **caractérisé en ce que** l'installation de réflexion (2) s'amincit en direction de la zone de pression (P) du fait que les deux surfaces de réflexion (2', 2") sont disposées l'une par rapport à l'autre de sorte qu'elles convergent vers la zone de pression (P).

8. Dispositif selon l'une des revendications précédentes, **caractérisé en ce que** l'installation de réflexion (2) est réalisée sous la forme d'un tunnel, qui s'amincit en direction de la zone de pression (P).

9. Dispositif selon l'une des revendications 1 à 8, **caractérisé en ce que** l'installation de réflexion (2) présente au moins une autre surfaces de réflexion (2"', 2""), qui est disposée à peu près perpendiculairement par rapport aux deux surfaces de réflexion (2', 2") au moins prévues.

10. Procédé pour border des pièces à traiter (8) avec une bande de chant (5), dans lequel, dans la région d'une zone de pression, la bande de chant (5) est amenée, par déplacement relatif de la pièce à traiter (8) et de la bande de chant, sur la chant (8a) de la pièce à traiter (8), en formant une fente d'assemblage (10) et est alors pressée au moyen d'un rouleau de pression (6), sachant qu'un faisceau (1), mis par une source de rayonnement (9), est guidé dans la région de la fente d'assemblage (10) et y provoque l'activation d'une couche adhésive ou d'une couche assurant l'adhésion, au moyen de laquelle la bande de chant (5) et la pièce à traiter (8) sont assemblées,
**caractérisé en ce que**
la bande de chant (5) peut être conduite à travers au moins une installation de réflexion (2) du faisceau (1) réfléchi par la bande de chant (5), sachant que l'installation de réflexion (2) présente au moins deux surfaces de réflexion (2', 2") et que l'installation d'amenée (11) de la bande de chant (5) sur la pièce à traiter (8) est conçue de sorte que ladite bande de chant (5) passe par la zone entre les surfaces de réflexion avant d'entrer en contact avec le dispositif de pression (6).

11. Procédé selon la revendication 10, **caractérisé en ce que** l'installation de réflexion (2) est utilisée pour la réflexion du faisceau (1) en direction de la bande de chant (5).

12. Procédé selon la revendication 10 ou 11, **caractérisé en ce qu'**au moins une surfaces de réflexion (2') de l'installation de réflexion (2) est positionnée de sorte que ladite surface de réflexion (2') s'étende entre la bande de chant (5) et la pièce à border (8).

13. Procédé selon l'une des revendications 10 à 12, **caractérisé en ce que** l'installation de réflexion (2) st disposée de sorte que le faisceau (1) y réfléchi est rétro réfléchi sur la bande de chant (5).

14. Procédé selon l'une des revendications 10 à 13, **caractérisé en ce que** l'on utilise en tant que faisceau (1) un faisceau laser.

15. Procédé selon l'une des revendications 10 à 14, **caractérisé en ce que** le faisceau (1) est guide de sorte qu'il frappe sur la bande de chant (5) avant de frapper sur une surface de réflexion (2') de l'installation de réflexion (2).

16. Procédé selon l'une des revendications 10 à 15, **caractérisé en ce qu'**au moins une surface de réflexion (2') de l'installation de réflexion (2) est disposée de sorte qu'elle s'étend sensiblement dans une direction de traitement (X) ou en angle aigu par rapport à ladite direction de traitement (X) dans laquelle la pièce à traiter (8) ou la bande de chant (5) est guidée.
